# EUROPÄISCHE PATENTSCHRIFT

(11) **EP 0 909 590 B1**
(45) Veröffentlichungstag und Bekanntmachung des Hinweises auf die Patenterteilung: **28.08.2002**
(21) Anmeldenummer: 98119287.5
(22) Anmeldetag: 13.10.1998
(51) Int. Cl.: B05C 17/005, B05C 17/01, A61C 9/00

(54) **Handgerät zum Ausbringen einer viskosen Flüssigkeit**
Hand tool for discharging a viscous liquid
Outil à main pour décharger un liquide visqueux

(30) Priorität: 15.10.1997 DE 19745567
(43) Veröffentlichungstag der Anmeldung: 21.04.1999
(73) Patentinhaber: Zwingenberger, Arthur, 6006 Luzern (CH)
(72) Erfinder: Zwingenberger, Arthur, 6006 Luzern (CH)
(74) Vertreter: Borchert, Uwe Rudolf, Dipl.-Ing.

(56) Entgegenhaltungen:
- EP-A- 0 483 981
- DE-U- 29 617 872
- US-A- 4 080 737
- US-A- 5 353 971

## Beschreibung

Die Erfindung betrifft ein Handgerät zum Ausbringen einer viskosen Flüssigkeit.

Aus der DE 31 03 610 A1 ist ein gattungsgemäßes Handgerät bekannt, das mit einem Rotationsantrieb versehen ist, der an ein Getriebe gekoppelt ist. über das Getriebe werden zwei Kolben aufweisende Kolbenstangen bewegt, die jeweils auf einen Behälter einwirken, der eine viskose Flüssigkeit einer Mehrkomponenten-Formmasse enthält. Der Behälter ist an seinem dem Kolben gegenüberliegenden Ende mit einer Mischdüse verbunden. Die Behälter können jeweils aus dem Handgerät entnommen und ausgewechselt werden. Über einen im Handgerät vorgesehenen Elektromotor oder über Druckluft wird das Getriebe angetrieben, an das die Kolbenstange mit dem Kolben angeschlossen sind. Zum Zurückstellen der Kolben in eine Ausgangslage ist zwischen den Kolbenstangen und dem Getriebe jeweils eine Kupplung eingebracht. Dieses Handgerät ist äußerst schwergewichtig und, u. a. aufgrund der erforderlichen Druckluftdichtungen, aufwendig in der Herstellung.

Desweiteren ist ein stationäres Tischgerät bekannt, daß in einem Gehäuse sowohl die Kolben zum Ausbringen der viskosen Flüssigkeit der Mehrkomponenten-Formmasse, ein Getriebe sowie einen über das Getriebe die Kolben antreibenden Rotationsantrieb aufweist. über einen im Gehäuse gelagerten Drehschalter kann der Rotationsantrieb manuell hinsichtlich seiner Drehgeschwindigkeit gesteuert werden. über die Drehgeschwindigkeit wird die pro Zeit ausgebrachte Formmasse geregelt.

Nachteilig an einer derartigen Konstruktion ist bei einer Verwendung im dentalen Bereich die mangelnde Einsetzbarkeit der Vorrichtung unmittelbar am Patienten, beispielsweise wenn eine Abdruckmasse für zahnärztliche Zwecke ausgebracht und gemischt werden soll.

Zudem benötigt der Zahnarzt für das Bedienen dieser Vorrichtung beide Hände, eine Hand für den Drehschalter und eine Hand für die Schale, in der die gemischte Abdruckformmasse eingebracht wird. Das Handling ist daher für den zahnärztlichen und zahntechischen Bereich äußerst aufwendig und ungünstig.

Aus der DE 31 22 061 A1 ist ein Hand- und Winkelstück für zahnärztliche Behandlungszwecke bekannt, das eine Batterie, einen Elektromotor und einen Schalter zum Ein- und Ausschalten des Motors aufweist. Über eine Kupplung ist das Hand- und Winkelstück mit zahnärztlichen Werkzeugen, wie einen Bohrer, verbindbar, wobei das Werkzeug das Gegenstück zur Kupplung des Hand- und Winkelstückes umfaßt.

In der DE 31 29 348 A1 ist eine Dossierspritze offenbart, die eine Kolbenstange und einen endseitig auf der Kolbenstange im zylindrischen Gehäuse angeordneten Kolben aufweist. Die Kolbenstange ist mit einem Gewinde versehen, das in eine Mutter eingreift, die in einem Führungsteil gelagert ist. Mit Drehen der im Führungsteil ortsfest gelagerten Mutter wird der Kolben über die Kolbenstange im Gehäuse bewegt.

Der Erfindung liegt die Aufgabe zugrunde, ein Handgerät zum Ausbringen einer viskosen Flüssigkeit anzugeben, das unter Vermeidung der genannten Nachteile flexibel einsetzbar, einfach zu handhaben und der Praxis, insbesondere auf zahnärztlichem oder zahntechnischem Gebiet, besser gerecht wird.

Diese Aufgabe wird durch die Merkmale des Patentanspruches 1 gelöst.

Vorteilhafte Weiterbildungen der Erfindung bilden die Gegenstände der Unteransprüche.

Der Erfindung liegt die Erkenntnis zugrunde, daß durch eine Konstruktion, bei der der Rotationsantrieb von dem Handgerät getrennt werden kann, sich flexible Gestaltungs- und Antriebsmöglichkeiten ergeben, die die Handhabung verbessern und die Einsatzmöglichkeiten erweitern.

Nach der Erfindung weist das Handgerät zum Ausbringen einer viskosen Flüssigkeit mittels mindestens eines Kolbens, der in einem eine Handhabe aufweisenden Gehäuse gelagert ist und auf ein die viskose Flüssigkeit aufweisendes Behältnis einwirkt, mit einem Getriebe für das Umsetzen einer rotatorischen Antriebsbewegung in eine translatorische Bewegung des Kolbens dessen Antriebseingang an einem Rotationsantrieb angeschlossen ist, wobei zwecks wahlweisen Anschluß des Handgeräts an unterschiedliche Rotationsantriebe zwischen Rotationsantrieb und Getriebe eine Kupplung vorgesehen ist.

Gemäß einer Ausführungsform der Erfindung ist das Handgerät zum Ausbringen einer aus viskosen Flüssigkeiten gebildeten, beim Ausbringen über eine Düse gemischten Mehrkomponenten-Formmasse ausgebildet, in dem zumindest zwei die Einzelkomponenten der Mehrkomponenten-Formmasse aufweisende Behältnisse vorgesehen sind und die Düse Teil eines statischen Mischers ist.

Insbesondere ist die Kupplung, wie eine ISO-Kupplung, für dentale Hand- und Winkelstücke ausgebildet. Hierdurch ist es möglich, den in jeder zahnärztlichen oder zahntechnischen Praxis zur Verfügung stehenden Antrieb zu nutzen, indem das Handgerät über die Kupplung daran angeschlossen wird. Das Handgerät kann daher auf einen eigenen im Gehäuse angeordneten Antriebsmotor verzichten und dadurch erheblich günstiger angeboten werden.

Gemäß einer Ausführungsform der Erfindung ist die Rotationsachse des Rotationsantriebes zu der Achse der Translationsbewegung des Kolbens oder zu der durch die Translationsbewegungen zweier nebeneinander angeordneter Kolben aufgespannten Ebene in einem Winkel angeordnet. Der Winkel wird dabei vorzugsweise von zwei ineinander greifenden Stirnrädern überbrückt. Dadurch wird eine kompakte kleinbauende Konstruktion gewährleistet.

Regelmäßig sind in zahnärztlichen oder zahntechnischen Praxen Elektro- oder Druckluftmotoren einer Dentaleinheit als Rotationsantrieb für Hand- und Winkelstücke mit Fräs-, Bohrund Schleifwerkzeugen zum Präparieren von Zähnen, Kronen oder ähnlichem im Einsatz. Vorzugsweise umfaßt daher der Rotationsantrieb für das Handgerät einen Elektro- oder Druckluftmotor und einen Kupplungsansatz als Teil der Kupplung für dentale Hand- und Winkelstücke. Hierdurch können die im Dentalbereich vorhandenen Antriebe für das Handgerät nach der Erfindung ohne weiteres genutzt werden. Der Motor ist hierbei insbesondere Teil einer Dentaleinheit.

Alternativ hierzu kann der Rotationsantrieb jedoch auch einen batteriebetriebenen Motor umfassen, beispielsweise wenn kein Dentalmotor zur Verfügung steht. Über die Kupplung kann zwischen dem batteriebetriebenen Motor und dem Dentalmotor ohne weiteres gewechselt werden, wodurch sich der Einsatzbereich erheblich vergrößert.

Um die Ausbringgeschwindigkeit beispielsweise der Mehrkompontenen-Formmasse des Handgeräts auf einfache Weise steuern zu können, wirkt der Motor mit einer Steuereinheit zusammen. Hierbei weist die Steuereinheit ein als Fußpedal ausgebildetes Stellglied auf. Das Einstellen der Motordrehzahl und somit der Ausbringgeschwindigkeit sowie das Ein- und Ausschalten des Motors erfolgt über den Fuß, so daß die Hände des Zahnarztes/Zahntechnikers für die Behandlung und Bearbeitung der Zähne, Kronen oder ähnlichem frei bleiben.

Gemäß einer Ausführungsform der Erfindung weist das Getriebe eine im Gehäuse gelagerte Abtriebswelle mit einem Gewindebereich auf, wobei in dem Gewindebereich eine mit dem Kolben verbundene Mutter eingreift.

Vorzugsweise ist zwischen dem Kolben und der Abtriebswelle eine zweite Kupplung vorgesehen, um ein Zurückführen der Kolben in eine Ausgangslage zu ermöglichen.

Gemäß einer Ausführungsform der Erfindung ist die Mutter Teil der zweiten Kupplung und die Mutter umgreift die Abtriebswelle lediglich bereichsweise. An die Mutter schließt sich eine gegenüber dem Gewinde vergrößerte Ausnehmung an, so daß mit Bewegen der zweiten Kupplung in Richtung der Mutter diese zusammen mit der Mutter von der Welle entkoppelt werden und die Abtriebswelle in der Ausnehmung angeordnet ist. Dadurch können nach Gebrauch des Handgerätes die Kolben auf einfache Weise wieder in ihre ursprüngliche Ausgangslage zurückverfahren werden, wodurch für den nächsten Einsatz der maximale Hub der Kolben und somit die maximale Ausbringbewegung der Kolben gewährleistet wird.

Um eine Grundposition festzulegen, in der die Mutter in das Gewinde der Abtriebswelle eingreift, ist zumindest eine Feder vorgesehen, die die Mutter mit der Kupplung gegen die Welle drückt.

Insbesondere ist eine weitere Feder vorgesehen, die die mit dem Kolben verbundene Kupplung in Richtung der öffnung des Strömungskanals drückt, wodurch zum einen der Eingriff der Mutter in das Gewinde der Abtriebswelle gesichert als auch die Arretierung eines die Behältnisse im Gehäuse haltenden Halters ermöglicht wird.

Gemäß einer Ausführungsform der Erfindung umfaßt das Getriebe ein Reduktionsgetriebe, das vorzugsweise ein Untersetzungsverhältnis von 500 oder 1000 zu 1 aufweist. Hierdurch können die mit hohen Umdrehungen arbeitenden Dentalmotoren auf eine praxisgerechte Drehzahl des Handgerätes der Vorrichtung vermindert werden.

Mit dem erfindungsgemäßen Handgerät kann der Zahnarzt sich ganz auf den Behandlungsbereich konzentrieren. Er muß weder manuell Kraft auf die Kolben ausüben noch eine Hand zum Einstellen des Stellgliedes blockieren, da dies auf einfache Weise über das Fußpedal erfolgen kann.

Zusätzliche Vorteile und Merkmale ergeben sich aus der folgenden Beschreibung mehrerer Ausführungsformen der Erfindung im Zusammenhang mit der Zeichnung. Es zeigen:
- Fig. 1: eine perspektivische Ansicht des Handgerätes gemäß einer Ausführungsform der Erfindung mit nicht eingesetzten Folienbeuteln, Kopfstück und statischem Mischer in der Aufnahme;
- Fig. 2: eine perspektivische Detailansicht der Baueinheit aus Kopfstück, statischem Mischer und geleerten Folienbeuteln, wobei die Spitze hierbei abgewinkelt ausgeführt ist;
- Fig. 3: eine perspektivische Ansicht des betriebsbereiten Handgeräts von Fig. 1;
- Fig. 4: eine Schnittansicht der Baueinheit aus statischem Mischer, Kopfstück und den beiden Folienbeuteln;
- Fig. 5: eine Querschnittsansicht durch das Handgerät von Fig. 1;
- Fig. 6: eine vergrößerte Teilansicht von Fig. 5;
- Fig. 7: eine schnittansicht der Kolben, der Folienbeutel, des Kopfstückes und des statischen Mischers von Fig. 5, wobei die Folienbeutel teilweise entleert sind;
- Fig. 8: eine Längsschnittansicht des Handgeräts;
- Fig. 9: eine Rückansicht des Handgeräts mit Teilschnitt;
- Fig. 10: eine perspektivische Explosionsdarstellung der Antriebsteile und Kolben des Handgeräts von Fig. 1;
- Fig. 11: eine perspektivische Darstellung des Handgeräts mit einem alternativen Antrieb;
- Fig. 12: eine perspektivische Ansicht des Gehäuses des Antriebes von Fig. 11; und
- Fig. 13: eine perspektivische Ansicht der verschiedenen Kombinationsmöglichkeiten des Handgeräts.

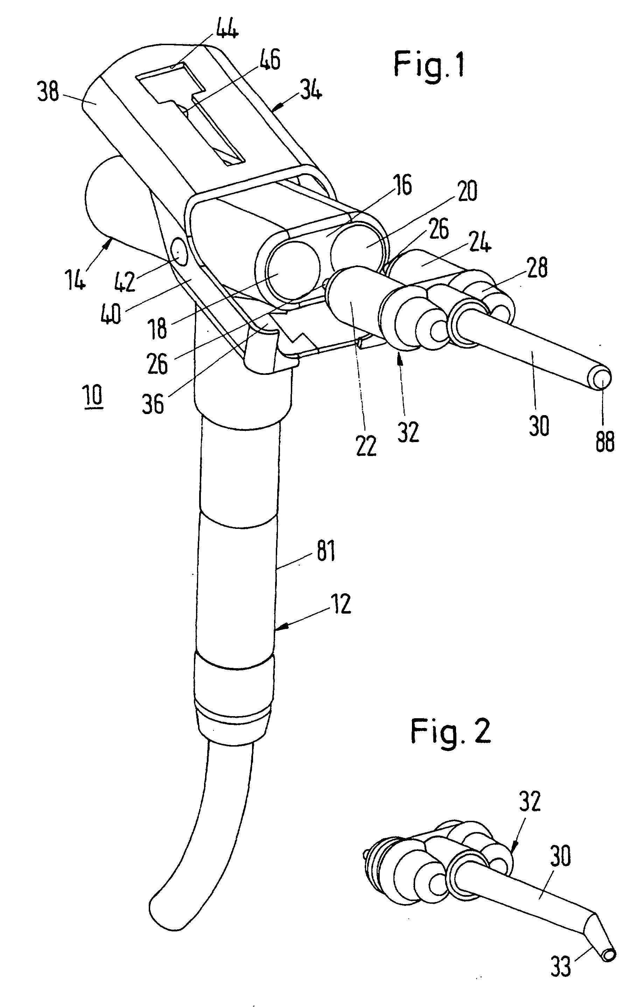

In Fig. 1 ist ein Handgerät 10 nach der Erfindung dargestellt. Das Handgerät 10 ist an einem von dem Handgerät 10 über eine erste Kupplung 82 abkuppelbaren elektromotorischen Rotationsantrieb 12 angeschlossen, der mit einer hier nicht dargestellten Steuereinrichtung zusammenwirkt. Alternativ hierzu kann auch ein durch Druckluft betriebener Lamellenmotor als Rotationsantrieb verwendet werden.

Das Handgerät 10 weist ein Gehäuse 14 auf, das eine Aufnahme 16 umfaßt. Die Aufnahme 16 besteht aus zwei voneinander getrennten zylindrischen Kammern 18 und 20, die zur Aufnahme von Folienschläuchen 22 und 24 dienen.

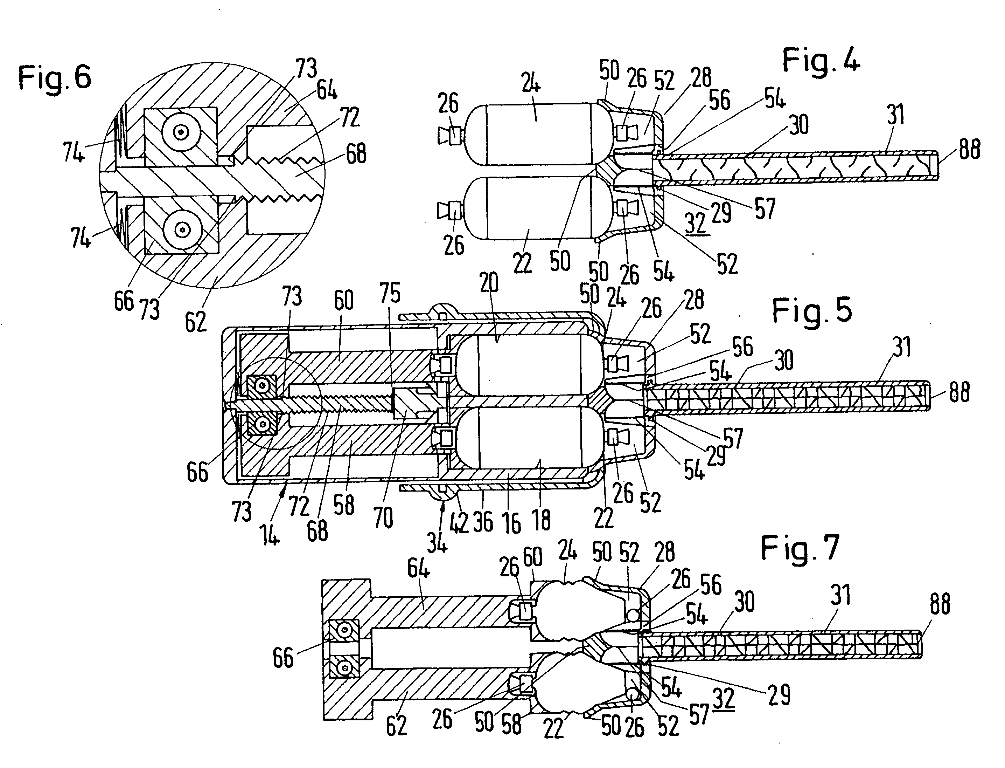

Ein Folienschlauch 22, 24 ist an seinen beiden Enden jeweils mit einer Klammer 26 verschlossen; siehe auch Fig. 4 bis 7, die zum besseren Abgleiten von dem Ende des entsprechenden Folienschlauches 22, 24 mit Teflon beschichtet sein kann.

Die beiden Folienschläuche 22 und 24 enthalten Komponenten einer Mehrkomponenten-Formmasse, wie dentales Abdruckmaterial, und sind mit einem Kopfstück 28 verbunden. Das Kopfstück 28 weist auf seiner den Folienschläuchen 22, 24 entfernt gelegenen Seite einen statischen Mischer 30 auf, der in dem Kopfstück 28 fest integriert ist und aus diesem in Richtung der den Folienschläuchen 22, 24 entfernt gelegenen Seite stabförmig herausragt.

Die Außenhülle 31 des statischen Mischers 30 ist gegenüber der Basis 29 drehbar ausgebildet. Hierdurch kann insbesondere eine auf dem statischen Mischer 30 angeordnete abgewinkelte Düse 33 - Fig. 2 - in entsprechende Bearbeitungspositionen ausgerichtet werden, wodurch beispielsweise beim Anwenden des Handgeräts in Zusammenhang mit Abdruckmaterial im dentalen Einsatz dessen Applikation im interproximalen sowie im lingualen oder buccalen Bereich erleichtert wird.

Die Folienschläuche 22 und 24, das Kopfstück 28 sowie der statische Mischer 30 bilden eine unlösbar miteinander verbundene Baueinheit, die nach Gebrauch aus dem Handgerät 10 entfernt und weggeworfen wird. Im folgenden wird diese Baueinheit als Einwegeinheit 32 bezeichnet.

Die Einwegeinheit 32 wird in die Aufnahme 16 so eingebracht, daß die Folienschläuche 22 und 24 in die zugeordneten Kammern 18 und 20 eingreifen und das Kopfstück 28 auf der Stirnseite der Aufnahme 16 aufliegt.

Die Einwegeinheit 32 kann durch einen Halter 34 in der Aufnahme 16 gesichert werden.

Der Halter 34 ist um eine Achse schwenkbar, die sich quer zur Längsachse der Aufnahme 16 bzw. der Kammern 18 und 20 erstreckt und weist einen unterhalb der Aufnahme 16 angeordneten Halterteil 36 sowie ein oberhalb der Aufnahme 16 angeordneten Halterteil 38 auf.

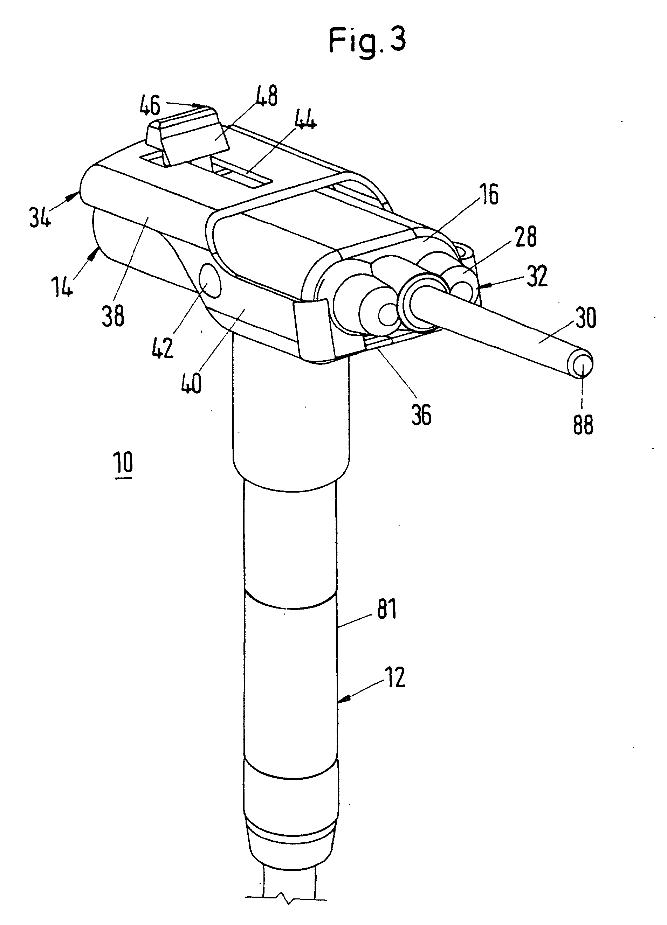

Das untere Halteteil 36 erstreckt sich unterhalb der Aufnahme 16 in Längsrichtung der Aufnahme 16 über die Aufnahme 16 hinaus und umgreift bereichsweise das Kopfstück 28 der in die Aufnahme 16 eingebrachten Einwegeinheit 32, siehe Fig. 3. Auf diese Weise ist die Einwegeinheit 32 in dem Gehäuse 14 des Handgeräts 10 gesichert.

Seitlich an dem unteren Halterteil 36 ist ein Steg 40 vorgesehen, der bei geschlossenem Halter 34 sich parallel zur Aufnahme 16 bis zum Anlenkpunkt 42 des Halters 34 jeweils seitlich der Aufnahme 16 erstreckt und das obere Halterteil 38 und das untere Halterteil 36 miteinander verbindet. Das untere Halterteil 36 erstreckt sich somit von dem Anlenkpunkt 42 in Richtung Einwegeinheit 32, wohingegen das obere Halterteil 38 sich von dem Anlenkpunkt 42 in Richtung auf die der Einwegeinheit 32 entfernt gelegene Seite des Gehäuses 14 erstreckt.

Der Halter 34 ist um seine Anlenkpunkte 42 aus einer die Einwegeinheit 32 in der Aufnahme 16 haltenden Schließstellung - Fig. 3 - in eine die Einwegeinheit 32 freigebende öffnungsstellung und umgekehrt verschwenkbar - Fig. 1 -.

In der Schließstellung liegt das obere Halterteil 38 an der Oberseite der Aufnahme 16 und das untere Halterteil 36 an der Unterseite der Aufnahme 16 an.

In dem oberen Halterteil 38 ist eine T-förmige Ausnehmung 44 eingebracht. Die T-förmige Ausnehmung 44 ist einer zweiten Kupplung 46 und einer Raste 48 zugeordnet, dessen Funktion im Zusammenhang mit dem Antrieb 12 weiter unten noch erläutert wird.

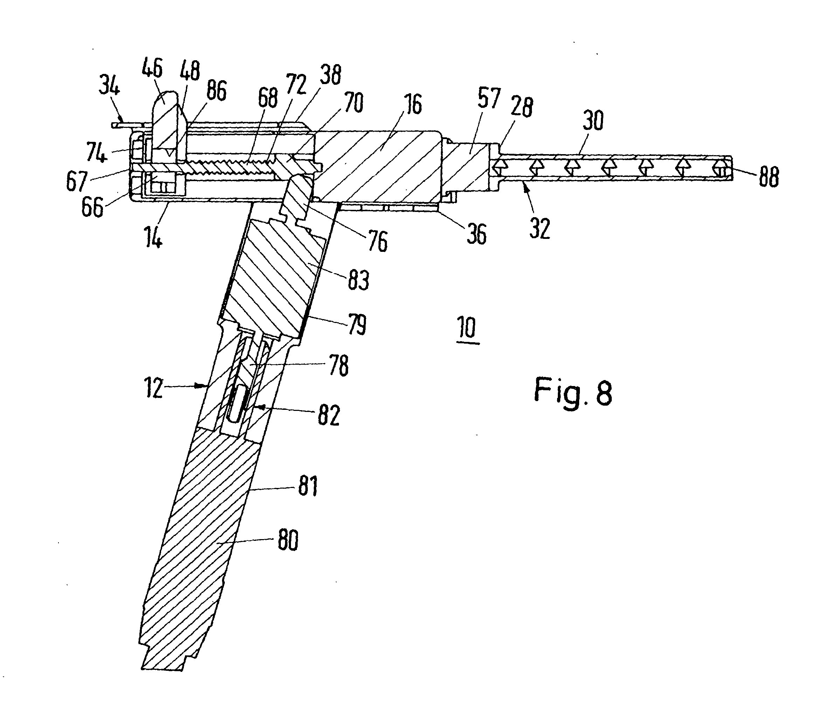

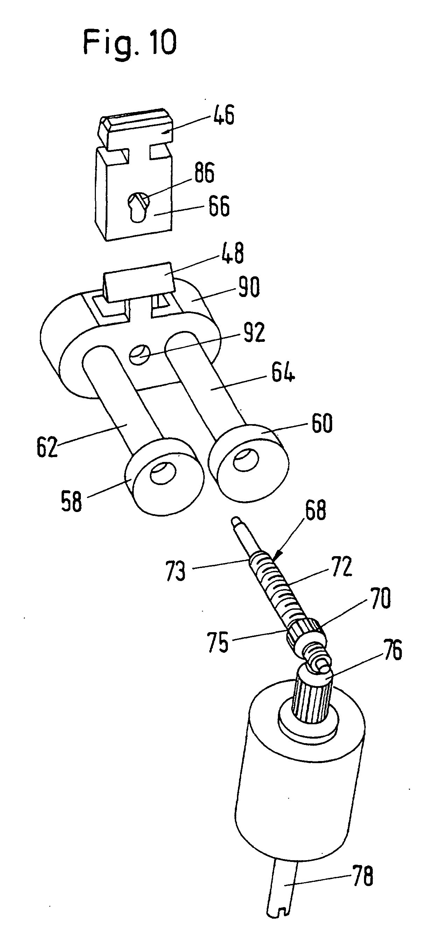

Vor der zweiten Kupplung 46 ist eine mit einem Endteil 90 - siehe Fig. 8 und 10 - verbundene Raste 48 angeordnet, die sich nach unten verbreitert. Mit dieser wird der Halter 34 in seiner Schließstellung arretiert. Parallel zur Längsachse der Aufnahme 16 ist das Endteil 90, in dem die zweite Kupplung 46 eingebracht ist, in Richtung der Einwegeinheit 32 federbelastet - Feder 74 gemäß Fig. 6 -, so daß mit Schließen des Halters 34 das Endteil 90 über die Raste 48 und die zweite Kupplung 46 zunächst gegen die Federkraft durch das obere Halterteil 36 nach hinten und mit Passieren der Raste 48 der Ausnehmung 44 des Halters 34 die zweite Kupplung 46 und das Endteil 90 mit der Raste 48 wieder nach vorne bewegt wird. Durch die Raste 48 wird ein Zurückverschwenken des Halters 34 in die öffnungsstellung verhindert.

Nach Gebrauch des Handgeräts 10 wird die zweite Kupplung 46 und darüber das Endteil 90 mit der Raste 48 gegen die Federkraft nach hinten gedrückt und die Raste 48 kann durch die Ausnehmung 44 mit Verschwenken des Halters 34 hindurchtreten. Die Einwegeinheit 32 wird frei und kann ausgewechselt werden.

In Fig. 2 ist eine gebrauchte Einwegeinheit 32 perspektivisch dargestellt, wobei der statische Mischer 30, wie oben erwähnt, mit einer abgewinkelten Düse 33 versehen ist.

Fig. 4 zeigt die Einwegeinheit 32 im Schnitt mit gefüllten Folienschläuchen 22 und 24. Die Folienschläuche 22, 24 sind an ihren Enden mit der Klammer 26 verschlossen. Ein freies Ende der Folienschläuche 22, 24 greift in das Kopfstück 28 ein, wobei jedem Folienschlauch 22, 24 ein Kranz 50 des Kopfstückes 28 zugeordnet ist. Der Kranz 50 ist an die Form des gefüllten Folienschlauches 22, 24 angepaßt und mit dem zugeordneten Folienschlauch 22, 24 verklebt, verschweißt oder ähnliches.

Das Kopfstück 28 weist jeweils einen das zugeordnete freie Ende des Folienschlauches 22 bzw. 24 mit dem statischen Mischer 30 verbindenden Strömungskanal 52 auf, der zunächst kammerförmig ausgebildet ist.

Dem statischen Mischer 30 ist für jede Kammer des Strömungskanals 52 ein Gitter 54 vorgeschaltet, das ein Eindringen der von den Folienschläuchen 22, 24 gelösten Klammern 26 oder Teilen der Folienschläuche 22, 24 in den statischen Mischer 30 verhindert.

Das den Kammern der Strömungskanäle 52 jeweils zugeordnete Gitter 54 ist mit dem statischen Mischer 30 einstückig ausgebildet. Der statische Mischer 30 mit dem Gitter 54 ist in eine Bohrung 56 im Kopfstück 28 eingebracht und mit dem Kopfstück 28 verklebt und somit unlösbar mit diesem verbunden. Das Gitter 54 erstreckt sich dabei über den gesamten Querschnitt des jeweils zugeordneten Strömungskanals 52.

Statische Mischer 30 weisen in ihrer Durchtrittsöffnung unterschiedliche Wendeln, Flanken oder ähnliches auf, die ein Durchmischen der beiden aus den Folienschläuchen 22 und 24 durch die Strömungskanäle 52 in den statischen Mischer 30 gelangenden Komponenten, beispielsweise eine Abdruckmasse für zahnärztliche Zwecke, ermöglichen. Je nach Konsistenz der Komponenten werden unterschiedliche Ausgestaltungen eines statischen Mischers 30 verwendet. Derartige statische Mischer 30 sind bekannt und werden daher nicht näher beschrieben.

Das Mischungsverhältnis der beiden Komponenten ist im vorliegenden Fall 1:1. Es kann aber auch unterschiedlich sein.

Die Komponenten der beiden Folienschläuche 22 und 24 werden erst im statischen Mischer 30 miteinander vermischt, d.h. die Strömungskanäle 52 halten die beiden Komponenten bis zum Eintritt in den statischen Mischer 30 voneinander getrennt. Hierfür ist eine die beiden Strömungskanäle 52 trennende Trennwand 57 vorgesehen.

Das Gehäuse 14 des Handgeräts 10 weist im vorderen Bereich die die zylindrischen Kammern 18, 20 aufweisende Aufnahme 16 auf. Im hinteren Bereich des Gehäuses 14 sind zwei Kolbenstangen 62 und 64 gelagert, an deren einem Ende jeweils ein Kolben 58, 60 vorgesehen ist. Ein Kolben 58, 60 greift in eine Kammer 18 bzw. 20 ein. Der Kolben 58, 60 ist jeweils in Richtung auf die Folienschläuche 22 und 24 gerichtete Öffnung des Strömungskanals 52 parallel zur Längsachse der Aufnahme 16 verschiebbar, siehe Fig. 5.

Der Kolben 58, 60 ist über seine Kolbenstange 62, 64 und dem die beiden Kolbenstangen 62, 64 verbindenden Endteil 90 - siehe Fig. 10 - mit einer Mutter 66 als Teil der zweiten Kupplung 46 verbunden, da, wie bereits ausgeführt wurde, die zweite Kupplung 46 in dem Endteil 90 angeordnet ist.

Der Kolben 58, 60 ist an die Form des dem Kopfstück 28 entfernt gelegenen freien Endes des gefüllten Folienschlauches 22, 24 angepaßt und umgreift die den Folienschlauch 22, 24 verschließende Klammer 26. Auf diese Weise wird verhindert, daß mit steigendem Innendruck im Folienschlauch 22, 24 die Klammer 26 sich vom Folienschlauch 22, 24 löst.

Mittig im Gehäuse 14 ist zwischen der Aufnahme 16 und der hinteren Gehäusewandung 67 eine Welle 68 gelagert, die im Bereich der Aufnahme 16 ein Stirnrad 70 und daran anschließend von der Aufnahme 16 weg verlaufend ein der Mutter 66 zugeordnetes Gewinde 72 aufweist. Das Gewinde 72 ist am Anfang 73 und am Ende 75 unterbrochen, so daß mit Erreichen des Anfangs 73 oder des Endes 75 die Mutter 66 durch die Welle 68 mit dem Gewinde 72 nicht mehr weiterbewegt wird. Hierdurch wird eine Beschädigung des Handgerätes 10 vermieden.

Die Kolbenstange 62, 64 und das Endteil 90 mit der Raste 48 ist durch eine Feder 74 jeweils in Richtung Folienschlauch 22, 24 belastet. Hierdurch wird sowohl die Raste 48 in einer den Halter 34 in der Schließstellung fixierenden Position gehalten als auch der Kolben 58, 60 gegen den zugeordneten Folienschlauch 22, 24 gedrückt, sobald die Einwegeinheit 32 in die Aufnahme 16 des Gehäuses 14 eingebracht ist. Zudem wird die Mutter 66 gegen das Ende des Gewindes 72 gedrückt.

In Fig. 5 und Fig. 6 ist die Position dargestellt, in der die zweite Kupplung 46 und das Endteil 90 mit der Raste 48 zum öffnen bzw. Schließen des Halters 34 nach hinten gedrückt ist. Sobald der Halter 34 verschlossen ist, drückt die Feder 74 die Kolbenstange 62, 64 in Richtung Kopfstück 28 und die Mutter 66 greift in das Gewinde 72 ein. Mit Drehen der Welle 68 wird die Mutter 66, die Kolbenstangen 62 und 64 sowie die Kolben 58 und 60 auf den Folienschlauch 22 bzw. 24 zubewegt.

In das Stirnrad 70 greift ein weiteres Stirnrad 76 ein. Das weitere Stirnrad 76 ist mit dem Rotationsantrieb 12 verbunden, dessen Drehachse zur Translationsachse der beiden Kolben 58 und 60 im Winkel angeordnet ist, siehe Fig. 8.

In Fig. 8 ist ein Längsschnitt durch das Handgerät 10 dargestellt, wobei hierbei die die Strömungskanäle 52 trennende Trennwand 57 vor dem statischen Mischer 30 und die die beiden zylindrischen Kammern 18 und 20 trennende Wand der Aufnahme 16 erkennbar ist.

Das weitere Stirnrad 76 ist mit dem Rotationsantrieb 12 über eine ISO-Kupplung 82 für dentale Hand- und Winkelstücke verbunden. Es können aber auch andere Kupplungen für Handund Winkelstücke verwendet werden. Hierfür greift das Gegenstück 78 der ISO-Kupplung 82 in einen ISO-Kupplungsansatz der ersten Kupplung 82 für dentale Hand- und Winkelstücke ein, der wiederum mit einem Dentalmotor 80 einer Zahnarzteinheit verbunden ist. Derartige Dentalmotoren 80 sind im Zusammenhang mit Hand- und Winkelstücke mit Fräs-, Bohr- und Schleifwerkzeugen für zahnärztliche Zwecke bekannt.

über die erste Kupplung 82 kann das Handgerät 10 einfach und schnell von dem Dentalmotor 80 gelöst werden und dieser mit einem Hand- oder Winkelstück für zahnärztliche Zwecke verbunden werden.

Das Gehäuse 81 des Dentalmotors 80 sowie die erste Kupplung 82 und der im Hinblick auf Fig. 8 nach unten weisende Teil des Gehäuses 14 des Handgeräts 10 bilden zusammen eine Handhabe 79, mit der das Handgerät 10 einfach in entsprechende Bearbeitungspositionen am Patienten gebracht werden kann. In der Handhabe 79 ist ein das weitere Stirnrad 76 und das Gegenstück 78 der ersten Kupplung 82 verbindendes Reduziergetriebe 83 zwischengeschaltet, das mit einer Untersetzung von 250 oder 1000 zu 1 versehen ist.

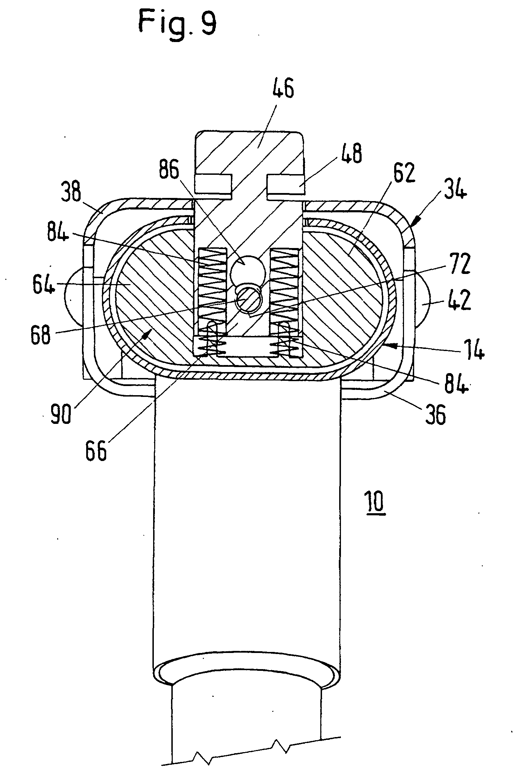

In Fig. 9 ist eine Rückansicht des Handgeräts 10 mit Teilschnitt dargestellt, wobei in dieser Darstellung die Ausbildung der zweiten Kupplung 46 verdeutlicht wird. Die zweite Kupplung 46 ist fest in dem die Kolbenstangen 62 und 64 verbindenden Endteil 90 gelagert und in vertikaler Richtung gegen die Kraft zweier Federn 84 beweglich.

Im unteren Bereich der zweiten Kupplung 46 ist die Mutter 66 vorgesehen, die die Welle 68 bereichsweise umgreift. Die Federn 84 drücken die Mutter 66 gegen die Welle 68. An der den Federn 84 gegenüberliegenden Seite der nach oben offenen Mutter 66 schließt sich eine Ausnehmung 86 an, die größer als die Welle 68 ausgeführt ist.

In der in Fig. 9 dargestellten Position greift die Mutter 66 in das Gewinde 72 der Welle 68 ein. Mit Drehen des Antriebsmotors 80 wird über die erste Kupplung 82, das Reduktionsgetriebe 83 und das Stirnrad 76 bewegt, welches wiederum das Stirnrad 70 und somit die Welle 68 antreibt. Mit Drehen der Welle 68 wird die Mutter 66 zusammen mit der zweiten Kupplung 46, den damit verbundenen Endteil 90, die Kolbenstangen 62 und 64 und die damit verbundenen Kolben 58 und 60 in Richtung auf die öffnung der den Folienschläuchen 22 und 24 zugewandten Strömungskanäle 52 bewegt.

In den Folienschläuchen 22 und 24 steigt damit parallel der Innendruck so stark, daß sich jeweils die Klammer 26 von dem Folienschlauch 22 und 24 löst, die in den Folienschläuchen 22 und 24 eingebrachten Komponenten durch die Strömungskanäle 52 in den statischen Mischer 30 gedrückt und dort vermischt werden. über die Austragsdüse 88 wird die gemischte im vorliegenden Fall Zweikomponenten-Formmasse, beispielsweise eine Abdruckmasse für zahnärztliche Zwecke, ausgebracht.

Alternativ hierzu können die Folien der Folienschläuche 22, 24 im Endbereich geschwächt ausgebildet sein, beispielsweise durch Laserabtag. Der Abtrag erstreckt sich beispielsweise linienartig nahezu über den Umfang, aber nicht ganz. Hierdurch wird erreicht, daß das aufgebrochene Ende des Folienschlauches 22, 24 mit dem Folienschlauch 22, 24 verbunden bleibt. Das Gitter 54 wird somit nicht verschlossen und der Austrag der Komponenten aus den Folienschläuchen 22, 24 in dem statischen Mischer 30 nicht behindert.

Nach Gebrauch wird die Einwegeinheit 32 in der beschriebenen Weise aus dem Handgerät 10 entfernt und eine neue, mit gefüllten Folienschläuchen 22 und 24 eingebracht.

Damit die Kolben 58 und 60 bei einer neu eingebrachten Einwegeinheit 32 wiederum den vollen Hub zur Verfügung haben, wird die zweite Kupplung 46 gegen die Federn 84 nach unten gedrückt. Die Welle 68 wird dadurch in der Ausnehmung 86 der Mutter 66 angeordnet. Die zweite Kupplung 46 mit den Kolbenstangen 62 und 64 sowie den Kolben 58 und 60 kann nunmehr gegen die Feder 74 in Richtung hintere Gehäusewandung 67 verfahren werden. Wird die zweite Kupplung 46 freigegeben, greift die Mutter 66 aufgrund der Kraft der Feder 74 und 84 wieder in das Gewinde 72 ein und kann mit Drehen der Welle 68 wiederum die Kolben 58 und 60 gegen die Folienschläuche 22 und 24 bewegen.

In Fig. 10 sind in einer perspektivischen Explosionsdarstellung die Antriebsteile im Einzelnen noch einmal gezeigt. Hier wird deutlich, daß die Kolbenstangen 62 und 64 in das gemeinsame Endteil 90 eingreifen, in dem die zweite Kupplung 46 gelagert ist und das Endteil 90 die Raste 48 umfaßt.

Es dürfte klar sein, daß die in dem Endteil 90 dargestellte Bohrung 92 größer als die Welle 68 ist.

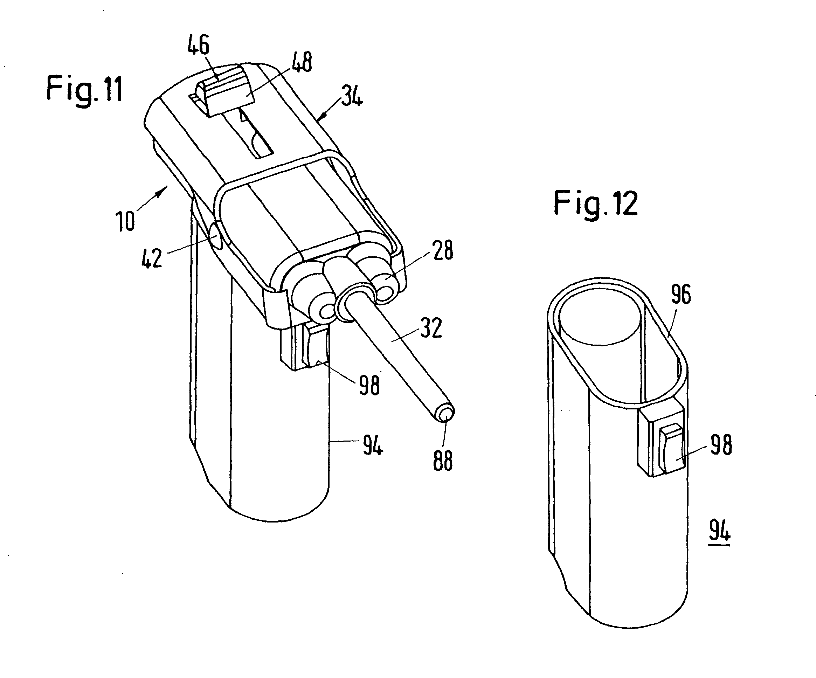

In den Fig. 11 und 12 ist eine alternative Antriebseinheit dargestellt, wobei ansonsten das Handgerät 10 in der bereits beschriebenen Weise aufgebaut ist. Die Antriebseinheit 94 umfaßt einen Batterie betriebenen, in einem Motorgehäuse 96 gelagerten Motor, der ebenfalls eine erste Kupplung für Handund Winkelstücke 104 aufweist. Das Motorgehäuse 96 ist zur Aufnahme von Batterien oder Akkus ausgebildet. über einen Schalter 98 wird der Motor gesteuert.

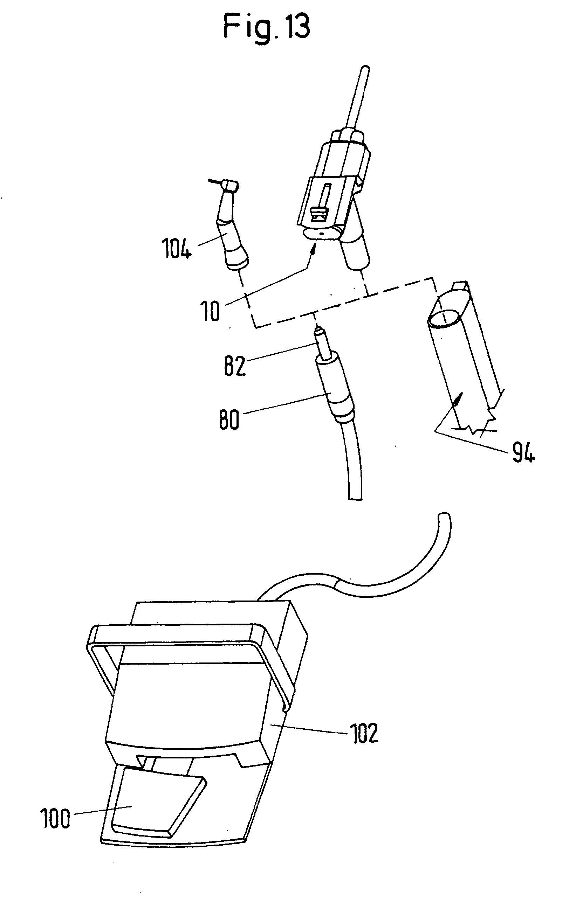

In Fig. 13 wird die flexible Ausgestaltung des Handgeräts 10 nach der Erfindung deutlich. Der Dentalmotor 80 einer Zahnarzteinheit ist in bekannter Weise mit einer ein Fußpedal 100 aufweisenden Steuereinheit 102 verbunden, mit der der Motor 80 gesteuert wird. An die dem Motor 80 nachgeschaltete erste Kupplung 82 kann ein Winkelstück 104 für zahnärztliche Zwecke oder eben das erfindungsgemäße Handgerät 10 angeschlossen werden.

Mit dem Handgerät 10 können somit Abdruckmassen, die aus zwei oder mehr aushärtbaren Komponenten bestehen, vom Zahnarzt einfach und steril appliziert werden.

Ein weiterer Vorteil ist auch darin zu sehen, daß der Zahnarzt über das Fußpedal 100 die ausbringbare Menge an Formmasse über die Motordrehzahl steuern kann, ohne daß hierfür eine zahnärztliche Hand benötigt wird oder Kraft aufgewendet werden muß. Der Zahnarzt kann sich voll und ganz auf das Einbringen der Abdruckmasse in den Behandlungsbereich des Patienten konzentrieren. Zudem wird sein in der Praxis sowieso vorhandener Dentalmotor 80 der Zahnarzteinheit besser genutzt.

Steht ein Dentalmotor 80 nicht zur Verfügung, kann auf die batteriebetriebene Antriebseinheit 94 ausgewichen werden.

Die Erfindung zeichnet sich durch ihre einfache Konstruktion und die breite Anwendungsmöglichkeit aus.

### Bezugszeichenliste

- 10: Handgerät
- 12: Rotationsantrieb
- 14: Gehäuse
- 16: Aufnahme
- 18: Kammer - links
- 20: Kammer - rechts
- 22: Folienschlauch - links
- 24: Folienschlauch - rechts
- 26: Klammer
- 28: Kopfstück
- 29: Basis
- 30: Statischer Mischer
- 31: Außenhülle
- 32: Einwegeinheit
- 33: Düse
- 34: Halter
- 36: Halterteil - unten
- 38: Halterteil - oben
- 40: Steg
- 42: Anlenkpunkt
- 44: Ausnehmung
- 46: zweite Kupplung
- 48: Raste
- 50: Kranz
- 52: Strömungskanal
- 54: Gitter
- 56: Bohrung
- 57: Trennwand
- 58: Kolben
- 60: Kolben
- 62: Kolbenstange
- 64: Kolbenstange
- 66: Mutter
- 67: hintere Gehäusewandung
- 68: Welle / Abtriebswelle
- 70: Stirnrad
- 72: Gewinde
- 73: Anfang des Gewindes
- 74: Feder
- 75: Ende des Gewindes
- 76: weiteres Stirnrad
- 78: Gegenstück
- 79: Handhabe
- 80: Dentalmotor
- 81: Motorgehäuse
- 82: erste Kupplung
- 83: Reduktionsgetriebe
- 84: Feder
- 86: Ausnehmung
- 88: Austragsdüse
- 90: Endteil
- 92: Bohrung
- 94: Antriebseinheit
- 96: Motorgehäuse
- 98: Schalter
- 100: Pedal
- 102: Steuereinheit
- 104: Winkelstück

## Patentansprüche

1. Handgerät (10) zum Ausbringen einer viskosen Flüssigkeit mittels mindestens eines Kolbens (58, 60), der in einem eine Handhabe (79) aufweisenden Gehäuse (14) gelagert ist und auf ein die viskose Flüssigkeit aufweisendes Behältnis (22, 24) einwirkt, mit einem Getriebe (70, 72, 76, 83) für das Umsetzen einer rotatorischen Antriebsbewegung in eine translatorische Bewegung des Kolbens (58, 60) dessen Antriebseingang (78) an einem Rotationsantrieb (12) angeschlossen ist, **dadurch gekennzeichnet, daß** zwecks wahlweisen Anschluß des Handgeräts an unterschiedliche Rotationsantriebe zwischen Rotationsantrieb (12) und Getriebe (70, 72, 76, 83) eine Kupplung (82) vorgesehen ist.

2. Handgerät zum Ausbringen einer aus viskosen Flüssigkeiten gebildeten, beim Ausbringen über eine Düse gemischten Mehrkomponenten-Formmasse nach Anspruch 1, **dadurch gekennzeichnet, daß** zumindest zwei die Einzelkomponenten der Mehrkomponenten-Formmasse aufweisende Behältnisse (22, 24) vorgesehen sind und die Düse Teil eines statischen Mischers (30) ist.

3. Handgerät nach Anspruch 1 oder 2, **dadurch gekennzeichnet, daß** die Kupplung (82), wie eine ISO-Kupplung (82), für dentale Hand- und Winkelstücke (104) ausgebildet ist.

4. Handgerät nach einem der vorangehenden Ansprüche, **dadurch gekennzeichnet, daß** die Rotationsachse des Rotationsantriebes (12) zu der Achse der Translationsbewegungen eines Kolbens oder der durch die Translationsbewegungen zweier nebeneinander angeordneter Kolben (58, 60) aufgespannten Ebene in einem Winkel angeordnet ist.

5. Handgerät nach Anspruch 4, **dadurch gekennzeichnet, daß** der Winkel über zwei ineinander greifende Stirnräder (70, 76) überbrückt ist.

6. Handgerät nach einem der vorangehenden Ansprüche, **dadurch gekennzeichnet, daß** der Rotationsantrieb (12) einen Elektro- oder Druckluftmotor, insbesondere einen Dentalmotor (80) einer Zahnarzteinheit, und einen Kupplungsansatz (82) für dentale Hand- und Winkelstücke (104) umfaßt.

7. Handgerät nach einem der Ansprüche 1 bis 5, **dadurch gekennzeichnet, daß** der Rotationsantrieb (12) einen batteriebetriebenen Motor umfaßt.

8. Handgerät nach einem der vorangehenden Ansprüche, **dadurch gekennzeichnet, daß** der Motor (80) mit einer Steuereinheit (102) zusammenwirkt, die ein als Fußpedal (100) ausgebildetes Stellglied aufweist.

9. Handgerät nach einem der vorangehenden Ansprüche, **dadurch gekennzeichnet, daß** eine Abtriebswelle (68) des Getriebes (70, 72, 76, 83) einen Gewindebereich (72) aufweist, in den eine mit dem Kolben (58, 60) verbundene Mutter (66) eingreift.

10. Handgerät nach Anspruch 9, **dadurch gekennzeichnet, daß** eine zweite Kupplung (46) zwischen den Kolben (58, 60) und der Abtriebswelle vorgesehen ist, um ein Zurückführen der Kolben in eine Ausgangslage zu ermöglichen.

11. Handgerät nach Anspruch 10, **dadurch gekennzeichnet, daß** die Mutter (66) Teil der zweiten Kupplung (46) ist, die Mutter (66) die Abtriebswelle (68) lediglich bereichsweise umgreift und sich an die Mutter (66) eine gegenüber dem Gewinde (72) vergrößerte Ausnehmung (86) anschließt, so daß mit Bewegen der zweiten Kupplung (46) in Richtung der Mutter (66) diese zusammen mit der Mutter (66) von der Welle (68) entkoppelt werden und die Abtriebswelle (68) in der Ausnehmung (86) angeordnet ist.

12. Handgerät nach Anspruch 11, **dadurch gekennzeichnet, daß** zumindest eine Feder (84) vorgesehen ist, die die Mutter (66) mit der Kupplung (46) gegen die Welle (68) drückt.

13. Handgerät nach Anspruch 11 oder 12, **dadurch gekennzeichnet, daß** eine weitere Feder (74) vorgesehen ist, die die mit dem Kolben (58, 60) verbundene Kupplung (46) in Richtung der öffnung des Strömungskanals (52) drückt.

14. Handgerät nach einem der vorangehenden Ansprüche, **dadurch gekennzeichnet, daß** das Getriebe (70, 72, 76, 82) ein Reduktionsgetriebe (83), insbesondere mit einem Untersetzungsverhältnis von 250 oder 1000 zu 1, aufweist.

## Claims

1. A hand-held instrument (10) for applying a viscous liquid by means of at least one piston (58, 60) which is supported in a housing (14) comprising a manipulation section (79) and which acts on a container (22, 24) comprising the viscous liquid, with a transmission (70, 72, 76, 83) for converting a rotatory driving motion into a translatory motion of the piston (58, 60), the drive input (78) of which is connected to a rotary drive (12), **characterised in that** for the purpose of optional connection of the hand-held instrument to different rotary drives a coupling (82) is provided between the rotary drive (12) and the transmission (70, 72, 76, 83).

2. Hand-held instrument according to Claim 1 for applying a multi-component moulding composition which is formed from viscous liquids and which is mixed in the course of application via a nozzle, **characterised in that** at least two containers (22, 24) comprising the individual components of the multi-component moulding composition are provided and the nozzle is part of a static mixer (30).

3. Hand-held instrument according to Claim 1 or 2, **characterised in that** the coupling (82), such as an ISO coupling (82), is designed for dental handpieces and angle pieces (104).

4. Hand-held instrument according to one of the preceding claims, **characterised in that** the axis of rotation of the rotary drive (12) is arranged at an angle in relation to the axis of the translational motions of a piston or of the plane which is defined by the translational motions of two pistons (58, 60) arranged alongside one another.

5. Hand-held instrument according to Claim 4, **characterised in that** the angle is spanned via two spur gears (70, 76) engaging one another.

6. Hand-held instrument according to one of the preceding claims, **characterised in that** the rotary drive (12) comprises an electric motor or a pneumatic motor, in particular a dental motor (80) of a dental unit, and a coupling attachment (82) for dental handpieces and angle pieces (104).

7. Hand-held instrument according to one of Claims 1 to 5, **characterised in that** the rotary drive (12) comprises a battery-driven motor.

8. Hand-held instrument according to one of the preceding claims, **characterised in that** the motor (80) works together with a control unit (102) which comprises an actuator taking the form of a foot pedal (100).

9. Hand-held instrument according to one of the preceding claims, **characterised in that** an output shaft (68) of the transmission (70, 72, 76, 83) comprises a threaded region (72) in which a nut (66) connected to the piston (58, 60) engages.

10. Hand-held instrument according to Claim 9, **characterised in that** a second coupling (46) is provided between the pistons (58, 60) and the output shaft in order to enable the pistons to be moved back into an initial position.

11. Hand-held instrument according to Claim 10, **characterised in that** the nut (66) is part of the second coupling (46), the nut (66) encompasses the output shaft (68) only zonally, and a recess (86) which is enlarged in comparison with the thread (72) adjoins the nut (66), so that upon movement of the second coupling (46) in the direction of the nut (66) said coupling is disengaged together with the nut (66) from the shaft (68) and the output shaft (68) is arranged in the recess (86).

12. Hand-held instrument according to Claim 11, **characterised in that** at least one spring (84) is provided which presses the nut (66) with the coupling (46) against the shaft (68).

13. Hand-held instrument according to Claim 11 or 12, **characterised in that** a further spring (74) is provided which presses the coupling (46) connected to the piston (58, 60) in the direction of the opening in the flow channel (52).

14. Hand-held instrument according to one of the preceding claims, **characterised in that** the transmission (70, 72, 76, 82) comprises a reduction gear (83), in particular with a reduction ratio of 250 to 1 or 1000 to 1.

## Revendications

1. Appareil à main (10) pour délivrer un liquide visqueux au moyen d'au moins un piston (58, 60) qui est monté dans un corps (14) présentant une poignée (79) et agit sur un récipient (22, 24) présentant le liquide visqueux, comportant un mécanisme (70, 72, 76, 83) pour la transformation d'un mouvement de rotation d'entraînement en un mouvement de translation du piston (58, 60), dont l'entrée d'entraînement (78) est reliée à une commande de rotation (12), **caractérisé par le fait que** pour le raccordement au choix de l'appareil à main à différentes commandes de rotation, un accouplement (82) est prévu entre la commande de rotation (12) et le mécanisme (70, 72, 76, 83).

2. Appareil à main pour délivre une matière à mouler à plusieurs constituants formée de liquides visqueux et mélangée lors du refoulement par une buse, selon la revendication 1, **caractérisé par le fait qu'**au moins deux récipients (22, 24) présentant les constituants individuels de la matière à mouler à plusieurs constituants sont prévus et que la buse fait partie d'un mélangeur statique (30).

3. Appareil à main selon l'une des revendications 1 et 2, **caractérisé par le fait que** l'accouplement (82), comme un accouplement ISO (82), est conçu pour des pièces à main et angulaires dentaires (104).

4. Appareil à main selon l'une des revendications précédentes, **caractérisé par le fait que** l'axe de rotation de la commande de rotation (12) fait un angle avec l'axe des mouvements des translation d'un piston ou avec le plan formé par les mouvements de translation de deux pistons (58, 60) placés l'un à côté de l'autre.

5. Appareil à main selon la revendication 4, **caractérisé par le fait que** l'angle est franchi par deux roues cylindriques (70, 76) qui s'engrènent.

6. Appareil à main selon l'une des revendications précédentes, **caractérisé par le fait que** la commande de rotation (12) comprend un moteur électrique ou pneumatique, en particulier un moteur dentaire (80) d'un dispositif de dentiste, et un appendice d'accouplement (82) pour pièces à main et angulaires dentaires (104).

7. Appareil à main selon l'une des revendications 1 à 5, **caractérisé par le fait que** la commande de rotation (12) comprend un moteur alimenté par batterie.

8. Appareil à main selon l'une des revendications précédentes, **caractérisé par le fait que** le moteur (80) coopère avec un dispositif de commande (102) qui présente un élément de réglage constitué d'une pédale (100).

9. Appareil à main selon l'une des revendications précédentes, **caractérisé par le fait qu'**un arbre de sortie (68) du mécanisme (70, 72, 76, 83) présente une partie filetée (72) dans laquelle s'engage un écrou (66) joint au piston (58, 60).

10. Appareil à main selon la revendication 9, **caractérisé par le fait qu'**un deuxième accouplement (46) est prévu entre les pistons (58, 60) et l'arbre de sortie pour permettre de ramener les pistons dans une position initiale.

11. Appareil à main selon la revendication 10, **caractérisé par le fait que** l'écrou (66) fait partie du deuxième accouplement (46), l'écrou (66) enserre l'arbre de sortie (68) seulement par endroits, et l'écrou (66) est suivi d'un évidement (86) agrandi par rapport au filetage (72), de sorte qu'avec mouvement du deuxième accouplement (46) en direction de l'écrou (66), cet accouplement est, conjointement avec l'écrou (66), désaccouplé de l'arbre (68), et l'arbre de sortie (68) est placé dans l'évidement (86).

12. Appareil à main selon la revendication 11, **caractérisé par le fait qu'**il est prévu au moins un ressort (84) qui presse l'écrou (66) avec l'accouplement (46) contre l'arbre (68).

13. Appareil à main selon l'une des revendications 11 et 12, **caractérisé par le fait qu'**il est prévu un autre ressort (74) qui presse l'accouplement (46) joint au piston (58, 60) en direction de l'orifice du conduit d'écoulement (52).

14. Appareil à main selon l'une des revendications précédentes, **caractérisé par le fait que** le mécanisme (70, 72, 76, 82) présente un réducteur (83), en particulier ayant un rapport de réduction de 250 ou 1000 à 1.
